# EUROPÄISCHE PATENTSCHRIFT

(11) **EP 1 846 273 B1**
(45) Veröffentlichungstag und Bekanntmachung des Hinweises auf die Patenterteilung: **22.08.2012**
(21) Anmeldenummer: 06707809.7
(22) Anmeldetag: 24.01.2006
(51) Int. Cl.: B60S 1/04

(54) **WISCHBLATT EINES SCHEIBENWISCHERS MIT EINER SCHUTZSCHIENE**
WIPER BLADE OF A WINDSCREEN WIPER, PROVIDED WITH A PROTECTIVE RAIL
RACLETTE D'UN ESSUIE-GLACE POURVUE D'UN RAIL DE PROTECTION

(30) Priorität: 03.02.2005 DE 102005005183; 08.08.2005 DE 102005037269
(43) Veröffentlichungstag der Anmeldung: 24.10.2007
(73) Patentinhaber: Robert Bosch GmbH, 70442 Stuttgart (DE); Volkswagen Aktiengesellschaft, 38440 Wolfsburg (DE)
(72) Erfinder: BRAUN, Hans, B-3001 Leuven (BE); DE BLOCK, Peter, B-3545 Halen (BE); WINDMOLDERS, Eric, B-3510 Kermt (BE); LUYPAERTS, Edwin, B-2490 Balen (BE); BEELEN, Hans, B-3540 Herk de Stad (BE); VAN BAELEN, David, B-3020 Herent (BE); FANGMEIER, Wilhelm, 38442 Wolfsburg (DE)
(86) Internationale Anmeldenummer: PCT/EP2006/050391
(87) Internationale Veröffentlichungsnummer: WO 2006/082149

(56) Entgegenhaltungen:
- EP-A- 1 391 360
- DE-A1- 3 222 864
- DE-A1- 10 014 753
- DE-A1-102004 058 532
- DE-C1- 19 626 532
- GB-A- 2 106 775
- US-A- 3 545 028
- US-A1- 2003 145 412
- US-A1- 2004 187 247

## Beschreibung

### Stand der Technik

Die Erfindung geht von einem Wischblatt eines Scheibenwischers nach dem Oberbegriff des Anspruchs 1 aus.

Bekannte Scheibenwischer besitzen einen Wischarm, mit dem ein Wischblatt gelenkig verbunden ist. Das Wischblatt umfasst ein Tragbügelsystem oder ein flaches, balkenförmiges, elastisches Tragelement, das eine Wischleiste über eine Fahrzeugscheibe, eine Windschutzscheibe oder Heckscheibe führt. Die Wischleiste besteht aus einem Elastomer, z.B. einem Natur- oder Synthesekautschuk oder aus Äthylenpropylen. Sie hat eine Kopfleiste, die über einen Kippsteg mit einer auf der Fahrzeugscheibe aufliegenden Wischlippe verbunden ist. Der Kippsteg wird durch zwei nach außen hin offene Längsnuten gebildet.

Aus der DE 30 05 965 A1 ist es bekannt, die Wischleiste mit einer Schutzschiene abzudecken, bevor ein neues Kraftfahrzeug konserviert wird, um sicher zu stellen, dass die Wischleiste in einem einwandfreien Zustand ist, wenn das Kraftfahrzeug ausgeliefert wird. Die Schutzschiene wird erst entfernt, wenn das neue Kraftfahrzeug nach einer Endkonservierung einem Käufer übergeben wird. Wird jedoch die Windschutzscheibe bei einer Zwischenlagerung des Kraftfahrzeugs, bei der Konservierung usw. verschmutzt, oder ist die Sicht durch Regen behindert, kann die Windschutzscheibe nicht ohne weiteres zum Rangieren des Kraftfahrzeugs mit der Wischanlage des Kraftfahrzeugs gereinigt werden, da das Schutzprofil steif und hart ist und nur teilweise auf der Windschutzscheibe aufliegt.

Deshalb besitzt die Schutzschiene auf der der Windschutzscheibe zugewandten Seite ein biegsames Band, das z.B. an die Schutzschiene anextrudiert ist. Diese besteht vorzugsweise aus Hart-PVC und das Band aus Weich-PVC.

Das Schutzprofil ist am Wischblatt befestigt, indem es mit Krallen in die Längsnuten eingreift, die den Kippsteg bilden. Die Schutzschiene schützt nicht die über die Wischlippe herausragenden Teile der Wischleiste. Außerdem kann die harte Schutzschiene nur in geringem Maße den Krümmungen der Fahrzeugscheibe folgen.

Aus der US-A-2003/145412 ist ein Wischblatt eines Scheibenwischer bekannt, wobei das Wischblatt eine Wischleiste mit einem flachen, balkenförmigen, elastischen Tragelement und einem Spoiler aufweist.

Weiterhin ist aus der US-A 3,545,028 ein Wischblatt mit einem Tragbügelsystem und mit einer Ersatzwischleiste bekannt, die die verschlissene Wischlippe einer alten Wischleiste umfasst und mit Haken an ihren zum Tragbügelsystem weisenden Rändern an über biegsame Streifen an dem Tragelement des Wischblatts gehalten ist.

Außerdem ist aus der US-A 2004/187247 ein Wischblatt bekannt, dessen Wischleiste von einem Tragbügelsystem über konkav zu einer Wischlippe vorgebogenen Federschienen gehalten wird. Ein haubenförmiger Deckel, der die Wischleiste und das Tragbügelsystem abdeckt und als Spoiler dient, stützt sich an den Federschienen ab.

Schließlich ist aus der DE-C1 19626532 ein Wischblatt mit einem Tragbügelsystem und einer Schutzhülle bekannt, die die Wischleiste und ihre Wischlippe umfasst. Die Schutzhülle besitzt an der den Bügeln zugewandten Seite Dichtlippen, die aneinander oder an Bügeln des Tragbügelsystems anliegen. Die Anpresskraft vom Wischerarm wird über die Wischleiste auf Schultern der Schutzhülle übertragen.

### Vorteile der Erfindung

Nach der Erfindung weist das Wischblatt eine Schutzschiene auf, die mit einem Grundkörper, der einen im Wesentlichen v-förmigen Querschnitt besitzt, eine Wischlippe (36) des Wischblatts umfasst und mit Befestigungselementen am Wischblatt lösbar befestigt ist, wobei sich die Schutzschiene an dem Spoiler abstützt, indem der Grundkörper der Schutzschiene zum Spoiler hin an seinen Längsseiten jeweils einen nach außen um etwa 90° abgewinkelten Flansch aufweist, der in eine nach innen offene Längsnut eingreift, die von zwei Rippen des Spoilers gebildet wird, wobei sich der Flansch an den einander zugewandten Seiten der Rippen abstützt. Da das Tragelement bzw. der Spoiler so vorgebogen sind, dass sie eine stärkere Krümmung aufweisen als die Fahrzeugscheibe, wird die Schutzschiene, die aus einem ähnlichen Werkstoff wie der Spoiler bestehen kann, ebenfalls vorgekrümmt, sodass sie unter der Anpresskraft eines Wischarms leicht der Krümmung der Fahrzeugscheibe folgen kann. Um die Fahrzeugscheibe zu trocknen und zu reinigen kann die Schutzschiene an der der Fahrzeugscheibe zugewandten Seite eine Wischlippe besitzen.

Durch den vorgebogenen Spoiler liegt der Flansch an beiden Rippen mit einer Vorspannung an, sodass die Schutzschiene in Längsrichtung nicht zusätzlich gesichert zu werden braucht.

Gemäß einer Ausgestaltung der Erfindung kann es jedoch auch zweckmäßig sein, dass an dem Spoiler bzw. an einem Spoilerschutz ein Aushilfswischblatt lösbar befestigt ist. Dieses kann sehr einfach gestaltet und kürzer als das normale Wischblatt sein. Es besitzt zweckmäßigerweise einen Kunststoffträger, der einen Wischgummi trägt und über ein Befestigungselement an dem Spoiler bzw. an dem Spoilerschutz lösbar befestigt ist, z.B. indem das Befestigungselement jeweils auf beiden Seiten des Wischblatts mit jeweils einem Klipp zu beiden Seiten eines Anschlusselements des Wischblatts an dem Spoiler bzw. an dem Spoilerschutz angeklippst ist. Die Klippse befinden sich in der Nähe des Anschlusselements, durch das das Wischblatt mit einem Wischarm gelenkig verbunden wird, sodass die Enden des Aushilfswischblatts der Krümmung der Fahrzeugscheibe leicht folgen können. Während die Schutzschiene, die in diesem Fall keine Wischlippe zu haben braucht, vor der Konservierung des neuen Fahrzeugs montiert wird, wird das Aushilfswischblatt zweckmäßigerweise erst nach der Konservierung montiert. Dadurch ist es nicht den hohen Temperaturen und den chemischen Einflüssen bei der Konservierung ausgesetzt, sodass der Verschleiß vermindert ist und die Wischeigenschaften verbessert sind.

Nach einer weiteren Ausführung der Erfindung schließt sich an den Grundkörper der Schutzschiene eine nach innen offene Längsnut an, in die eine nach außen gerichtete Rippe des Spoilers eingreift. Die Längsnut wird zweckmäßigerweise von einem nach außen vom Grundkörper der Schutzschiene abgewinkelten Flansch und eine daran angeformte, nach innen gerichtete Nutwand gebildet. Die nach außen gerichtete Rippe des Spoilers bildet in vorteilhafter Weise mit einer nach innen gerichteten Rippe des Spoilers eine nach außen offene Nut, in die die Nutwand der Schutzschiene eingreift, sodass eine verschachtelte, formschlüssige Verbindung zwischen der Schutzschiene und dem Spoiler gebildet wird.

Die Schutzschiene kann auch von außen auf den unteren Teil aufgeklippst werden. Hierzu dient ein Halteprofil, das sich an einen an den Grundkörper der Schutzschiene nach außen abgewinkelten Flansch anschließt. Das Halteprofil umfasst den unteren Teil des Spoilers im Bereich des Tragelements, sodass die Schutzschiene durch den Flansch und einen oberen Schenkel des Halteprofils am Spoiler gehalten ist. Um die Schutzschiene leicht an den Spoiler anklippsen zu können, ist gemäß einer Ausgestaltung der Erfindung vorgesehen, dass an dem Schenkel des Halteprofils der Schutzschiene eine Leiste angeformt ist, die von der Außenkontur des Spoilers abgewinkelt ist. Durch die Leiste werden sowohl die Montage als auch die Demontage der Schutzschiene erleichtert. Besitzt das Wischblatt an seinen Enden eine Endkappe, so ist es vorteilhaft, wenn die Flansche der Schutzschiene sowie die Halteprofile mit den Leisten im Bereich der Endkappe Aussparungen aufweisen.

Anstelle des an der Schutzschiene angeformten Halteprofils können auch einzelne Klippse vorgesehen werden, durch die die Schutzschiene am unteren Rand des Spoilers befestigt wird. Hierzu umfasst ein Halteprofil des Klipps mit einem Schenkel den unteren Teil des Spoilers im Bereich des Tragelements, während ein vom Spoiler abgewinkelter Teil eines nach außen gerichteten Flansches des Grundkörpers der Schutzschiene in eine Längsnut des Klipps eingreift, die nach innen offen ist. Somit wird durch den Klipp die Schutzschiene mit ihrem nach außen gerichteten Flansch gegen die Unterseite des Spoilers gedrückt. Auf der Länge des Wischblatts sind mehrere Klippse verteilt vorgesehen.

Die Schutzschiene kann auch über nach innen weisende Stege in Längsnuten der Wischleiste gehalten werden, wobei die Seitenwände des Grundkörpers der Schutzschiene über die Längsrippen zum Spoiler hin vorstehen und sich an dem Tragelement bzw. den Tragelementen abstützen. Eine weitere Variante sieht vor, dass der Spoiler durch einen Spoilerschutz geschützt wird, der der Außenkontur des Spoilers angepasst ist. Dadurch wird in vorteilhafter Weise der Spoiler ebenfalls bei der Konservierung geschützt, sodass seine Oberfläche nicht beschädigt werden kann. Gleichzeitig kann die Schutzschiene am Spoilerschutz befestigt werden, und zwar grundsätzlich in der gleichen Weise wie am Spoiler selbst. Dies hat jedoch den Vorteil, dass nach dem Entfernen der Schutzschiene und des Spoilerschutzes keine Halteelemente am Spoiler vorhanden sind, die Schmutzablagerungen begünstigen und die Optik stören können.
Zeichnung

Weitere Vorteile ergeben sich aus der folgenden Zeichnungsbeschreibung. In der Zeichnung sind Ausführungsbeispiele der Erfindung dargestellt.

Es zeigen:
Fig. 1 einen perspektivischen Querschnitt durch ein erfindungsgemäßes Wischblatt,
Fig. 2 und 3 Varianten zu Fig. 1,
Fig. 4 eine perspektivische Darstellung eines Endes eines Wischblatts mit einer Endkappe,
Fig. 5 eine Variante zu Fig. 3,
Fig. 6 ein Wischblatt mit einer Schutzschiene, die sich an einem Tragelement abstützt,
Fig. 7 ein Wischblatt mit einer Schutzschiene und einem Spoilerschutz und
Fig. 8 eine perspektivische Darstellung eines Wischblatts mit einem Aushilfswischblatt.

### Beschreibung der Ausführungsbeispiele

Ein Wischblatt 10 besitzt eine Wischleiste 14 mit einer Wischlippe 16, die über einen Kippsteg 18 mit einer Kopfleiste 20 verbunden ist. Die Kopfleiste 20 weist zwei einander gegenüberliegende Längsnuten 24 auf, die einen Steg 22 bilden, und in die jeweils ein flaches, balkenförmiges, elastisches Tragelement 26 eingelegt ist. Das Tragelement 26 ist in Längsrichtung so vorgebogen, dass das Wischblatt 10 unter der Anpresskraft eines nicht dargestellten Wischarms an einer Fahrzeugscheibe mit einer geeigneten Druckverteilung anliegt.

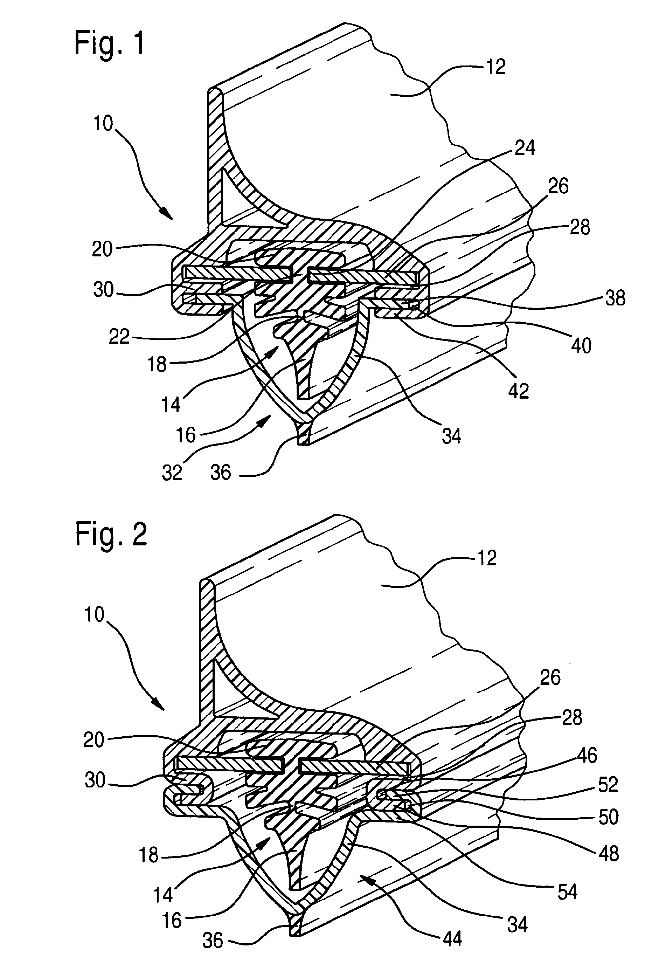

Das Wischblatt 10 besitzt ferner einen Spoiler 12, der zu den Tragelementen 26 hin zwei nach innen gerichtete Längsnuten 28 aufweist, in die die Tragelemente 26 eingreifen und somit den Spoiler 12 am Wischblatt 10 halten. In Richtung zur Wischlippe 16 wird die Längsnut 28 des Spoilers 12 von einer nach innen weisenden Rippe 30 begrenzt. Bei der Ausführung nach Fig. 1 schließt sich an die Rippe 30 auf jeder Längsseite eine weitere Längsnut 40 an, die in Richtung zur Wischlippe 16 von einer weiteren Rippe 42 begrenzt wird.

Eine Schutzschiene 32 umfasst mit ihrem Grundkörper 34, der einen v-förmigen Querschnitt aufweist, die Wischlippe 16 und den angrenzenden Teil der Kopfleiste 20, sodass die Wischleiste 14 zum einen von der Schutzschiene 32 und zum anderen von dem Spoiler 12 gegenüber Einflüssen aus der Umgebung geschützt ist. Die Schutzschiene 32 wird vor der Konservierung eines neuen Fahrzeugs montiert und kurz vor der Auslieferung des Fahrzeugs an einen Kunden demontiert. Die Schutzschiene 32 bei der Ausführung nach Fig. 1 besitzt an den Rändern ihres Grundkörpers 34 nach außen um etwa 90 Grad abgewinkelte Flansche 38, die in die Längsnuten 40 des Spoilers 12 eingreifen. Sie ist somit sicher am Spoiler 12 geführt und kann bei einer geeigneten Auswahl des Werkstoffs die vorgegebenen Krümmungen des Spoilers 12 annehmen. Zur Ausübung der Reinigungs- und Trockenfunktion besitzt die Schutzschiene 32 eine Wischlippe 36. So kann der Scheibenwischer vor der Auslieferung des Fahrzeugs betätigt werden, ohne dass die Wischlippe 16 oder die Fahrzeugscheibe beschädigt werden.

Die Ausführung nach Fig. 2 unterscheidet sich von der Ausführung nach Fig. 1 dadurch, dass der Spoiler 12 anstelle der nach innen offenen Längsnuten 40 an seinen Längsseiten zwei nach außen hin offene Längsnuten 46 aufweist, die einerseits von der nach innen weisenden Rippe 30 und andererseits durch eine sich daran anschließende, nach außen weisende Rippe 48 gebildet wird. Eine Schutzschiene 44 besitzt an den Rändern ihres v-förmig divergierenden Grundkörpers 34 nach außen abgewinkelte Flansche 54, die mit Nutwänden 52 nach innen offene Längsnuten 50 bilden. Die Nutwände 52 greifen in die nach außen offenen Längsnuten 46 des Spoilers 12, während die nach außen gerichtete Rippe 48 des Spoilers 12 in die nach innen offene Längsnut 50 der Schutzschiene 44 eingreift.

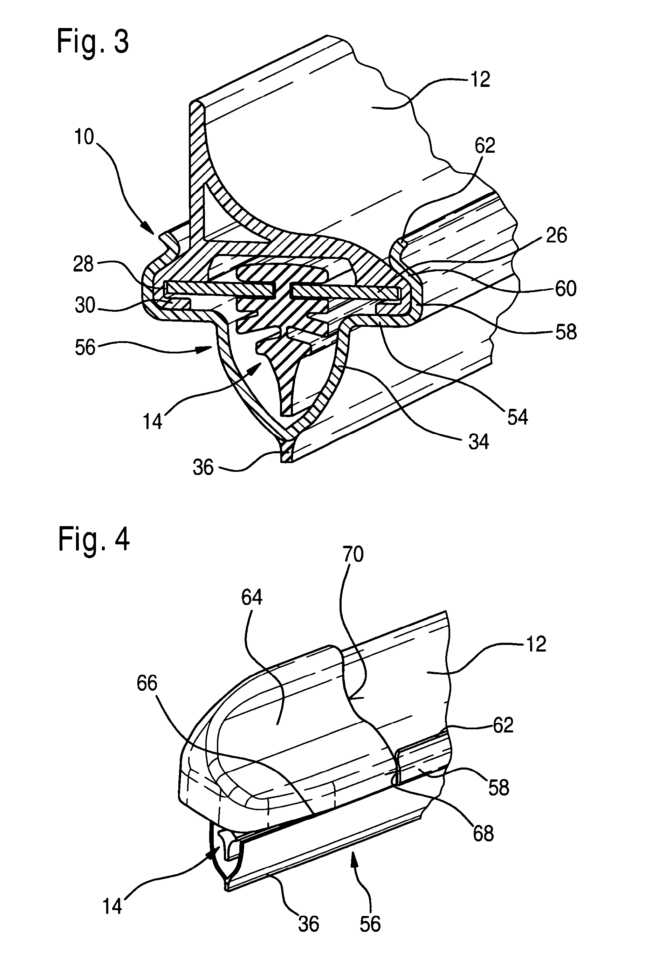

Bei der Ausführung nach Fig. 3 besitzt eine Schutzschiene 56 an den Rändern ihres v-förmig divergierenden Grundkörpers 34 ebenfalls nach außen divergierende Flansche 54, jedoch schließen sich an diese Halteprofile 58 an, die mit Schenkeln 60 die seitlich vorstehenden Teile des Spoilers 12 im Bereich der Tragelemente 26 umfassen. Um zur leichteren Montage der Schutzschiene 56 diese besser an den Spoiler 12 anklippsen zu können, besitzt der Schenkel 60 an seiner freien Längskante eine Leiste 62, die von der Außenkontur des Spoilers 12 abgewinkelt ist. Die Leiste 62 erleichtert sowohl die Montage als auch die Demontage der Schutzschiene 56, die im montierten Zustand zwischen dem Schenkel 60 und dem Flansch 54 am Spoiler 12 gehalten wird.

Die Ausführung nach Fig. 4 entspricht im Wesentlichen der Ausführung nach Fig. 3. Allerdings besitzt das Wischblatt 10 eine Endkappe 64, die auf den Tragelementen 26 befestigt ist, den Spoiler 12 endseitig überlappt und die Tragelemente 26 fixiert. Im Bereich der Endkappe 64 besitzen der Flansch 54, das Aufnahmeprofil 58 mit seinem Schenkel 60 und die Leiste 62 eine Aussparung 66 für die Endkappe 64, sodass die Stirnwände 68 der Aufnahmeprofile 58 der zugewandten Stirnfläche 70 der Endkappe 64 gegenüberliegen. Das Spiel zwischen den Stirnflächen 68 und 70 wird so groß gewählt, dass bei der Biegung des Wischblatts 10 kein Zwang entsteht.

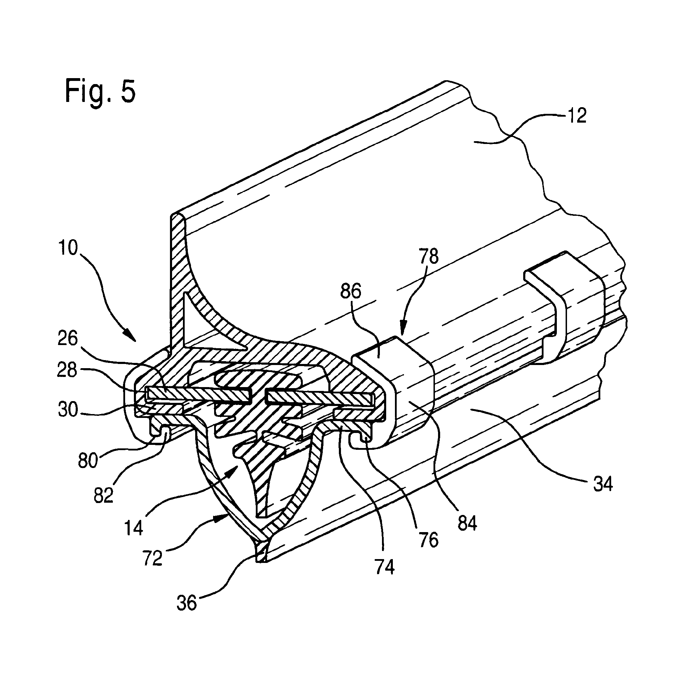

Die Ausführung nach Fig. 5 unterscheidet sich von den Ausführungen nach Fig. 3 und Fig. 4 dadurch, dass bei einer Schutzschiene 72 anstelle eines Halteprofils 58 separate Klippse 78 vorgesehen sind, die die Schutzschiene 72 an den seitlich vorstehenden Rändern des Spoilers 12 befestigen. Hierzu besitzt die Schutzschiene 72 an den Rändern des v-förmig divergierenden Grundkörpers 34 nach außen abgewinkelte Flansche 74 mit zur Wischlippe 36 hin abgewinkelten Teilen 76. Diese greifen in Längsnute 80 der Klippse 78 ein. Die Längsnuten 80 werden nach innen durch Schenkel 82 begrenzt. Die Klippse 78 umfassen mit einem Halteprofil 84 und einem Schenkel 86 die seitlich vorstehenden Ränder des Spoilers 12, sodass der Flansch 74 der Schutzschiene 72 durch die Klippse 78 gegen die nach innen gerichtete Rippe 30 des Spoilers 12 gedrückt werden. Auf Grund der Klippse 78 besitzt die Schutzschiene 72 ein niedriges Biegewiderstandsmoment, sodass sie sich leicht den Krümmungen der Fahrzeugscheibe anpassen kann.

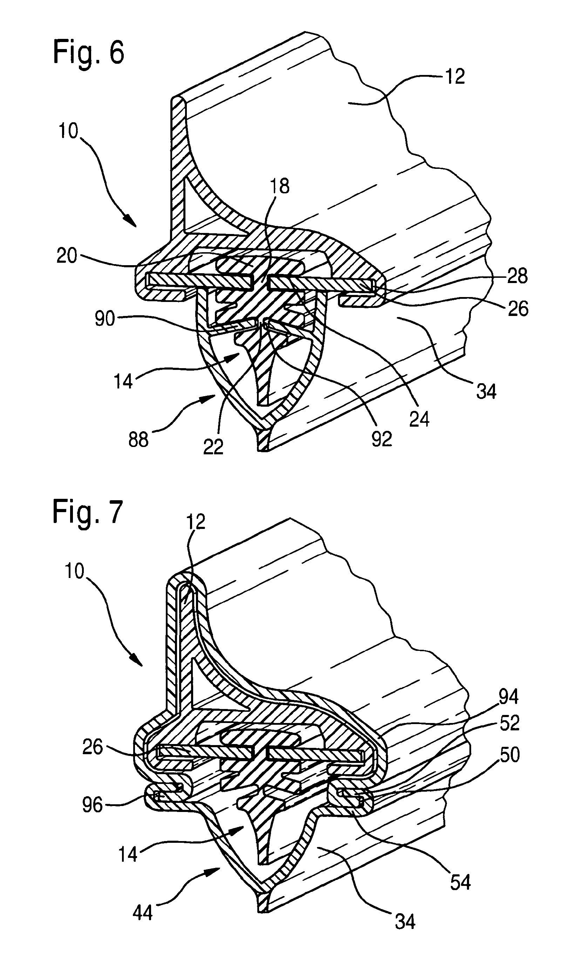

Eine Schutzschiene 88 gemäß einer Ausführung nach Fig. 6 ist besonders einfach und preiswert. Sie besitzt an ihrem Grundkörper 34 nach innen gerichtete Rippen 90, die in Längsnuten 92 seitlich des Kippstegs 18 eingreifen. Die über die Rippen 90 zum Spoiler 12 hin überstehenden Teile der Schutzschiene 88 stützen sich an den Tragelementen 26 ab, sodass die Wischleiste 14 rundum gegenüber der Umgebung geschützt ist.

In vielen Fällen ist es wünschenswert, dass nicht nur die Wischleiste bei der Konservierung des Fahrzeugs geschützt ist, sondern auch der Spoiler 12, damit er nicht bei der Konservierung beschädigt oder während der Bereithaltezeit des Fahrzeugs unansehnlich wird. Zu diesem Zweck besitzt die Ausführung nach Fig. 7 einen Spoilerschutz 94, der der Außenkontur des Spoilers 12 angepasst ist und von der Längsseite über den Spoiler 12 geschoben oder quer dazu aufgeklippst werden kann. Der Spoilerschutz 94 besitzt nach außen weisende Halteschienen 96 ähnlich den Nutwänden 52 des Spoilers 12 nach Fig. 2, die in die nach innen offenen Längsnuten 50 der Schutzschiene 44 eingreifen. Im Übrigen können die Schutzschiene 44 und der Spoilerschutz 94 entsprechend den Ausführungen der Schutzschienen 32, 56 und dem Spoiler 12 nach den Ausführungen nach Fig. 1 und Fig. 3 gestaltet werden.

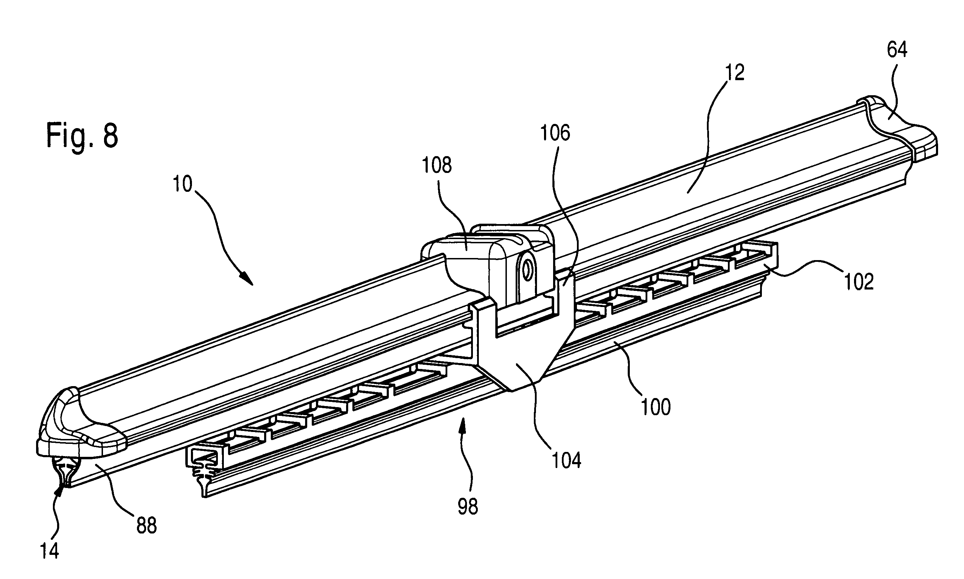

Bei der Ausführung nach Fig. 8 ist am Wischblatt 10 ein Aushilfswischblatt 98 vorgesehen, das einen Kunststoffhalter 102 für einen Wischergummi 100 besitzt. Der Kunststoffhalter 102 ist über ein Befestigungselement 104 mit Klippsen 106 an den unteren Seitenrändern des Spoilers 12 befestigt. Dabei sind die Klippse 106 jeweils seitlich in der Nähe eines Anschlusselements 108 zum gelenkigen Verbinden mit einem nicht dargestellten Wischarm angeordnet. Das Aushilfswischblatt 98 kann die Wischfunktion besser übernehmen als die Wischlippe 36 an den Schutzschienen 32, 44, 56, 72 und 88, da es erst nach der Konservierung des Fahrzeugs montiert wird und somit nicht den Temperaturen und chemischen Einflüssen bei der Konservierung ausgesetzt ist. Das Aushilfswischblatt 98 kann gegenüber einem normalen Wischblatt 10 einfach gestaltet und kürzer sein.

## Patentansprüche

1. Wischblatt (10) eines Scheibenwischers mit einer Wischleiste (14) mit mindestens einem flachen, balkenförmigen, elastischen Tragelement (26) und einem Spoiler (12), **dadurch gekennzeichnet, dass** das Wischblatt (10) eine Schutzschiene (32, 44, 56, 72, 88) aufweist, die mit einem Grundkörper (34), der einen im Wesentlichen v-förmigen Querschnitt besitzt, eine Wischlippe (36) des Wischblatts (10) umfasst und mit Befestigungselementen (38, 52, 58, 78, 90) am Wischblatt (10) lösbar befestigt ist, wobei sich die Schutzschiene (32, 44, 56, 72, 88) an dem Spoiler (12) abstützt, indem der Grundkörper (34) der Schutzschiene (32) zum Spoiler (12) hin an seinen Längsseiten jeweils einen nach außen um etwa 90° abgewinkelten Flansch (38) aufweist, der in eine nach innen offene Längsnut (40) eingreift, die von zwei Rippen (30, 42) des Spoilers (12) gebildet wird, wobei sich der Flansch (38) an den einander zugewandten Seiten der Rippen (30, 42) abstützt.

2. Wischblatt (10) eines Scheibenwischers mit einer Wischleiste (14) mit mindestens einem flachen, balkenförmigen, elastischen Tragelement (26) und einem Spoiler (12), **dadurch gekennzeichnet, dass** das Wischblatt (10) eine Schutzschiene (32, 44, 56, 72, 88) aufweist, die mit einem Grundkörper (34), der einen im Wesentlichen v-förmigen Querschnitt besitzt, eine Wischlippe (36) des Wischblatts (10) umfasst und mit Befestigungselementen (38, 52, 58, 78, 90) am Wischblatt (10) lösbar befestigt ist, wobei sich die Schutzschiene (32, 44, 56, 72, 88) an dem Spoiler (12) abstützt, indem sich an dem Grundkörper (34) der Schutzschiene (44) eine nach innen offene Längsnut (50) anschließt, in die eine nach außen gerichtete Rippe (48) des Spoilers (12) eingreift.

3. Wischblatt (10) mit einem Spoiler (12) und einer Schutzschiene (44) nach Anspruch 2, **dadurch gekennzeichnet, dass** die Längsnut (50) von einem nach außen vom Grundkörper (34) der Schutzschiene (44) abgewinkelten Flansch (54) und einer daran angeformten, nach innen gerichteten Nutwand (52) gebildet ist, während die nach außen gerichtete Rippe (48) des Spoilers (12) mit einer nach innen gerichteten Rippe (30) eine nach außen offene Längsnut (46) bildet, in die die Nutwand (52) der Schutzschiene (44) eingreift.

4. Wischblatt (10) eines Scheibenwischers mit einer Wischleiste (14) mit mindestens einem flachen, balkenförmigen, elastischen Tragelement (26) und einem Spoiler (12), **dadurch gekennzeichnet, dass** das Wischblatt (10) eine Schutzschiene (32, 44, 56, 72, 88) aufweist, die mit einem Grundkörper (34), der einen im Wesentlichen v-förmigen Querschnitt besitzt, eine Wischlippe (36) des Wischblatts (10) umfasst und mit Befestigungselementen (38, 52, 58, 78, 90) am Wischblatt (10) lösbar befestigt ist, wobei sich die Schutzschiene (32, 44, 56, 72, 88) an dem Spoiler (12) abstützt, indem die Schutzschiene (56) an ihrem Grundkörper (34) einen nach außen abgewinkelten Flansch (54) aufweist, an den sich ein Halteprofil (58) anschließt, das den unteren Teil des Spoilers (12) im Bereich des Tragelements (26) umfasst, sodass die Schutzschiene (56) durch den Flansch (54) und einen oberen Schenkel (60) des Halteprofils (58) am Spoiler (12) gehalten ist.

5. Wischblatt (10) mit einem Spoiler (12) und einer Schutzschiene (56) nach Anspruch 4, **dadurch gekennzeichnet, dass** an dem Schenkel (60) des Halteprofils (58) der Schutzschiene (56) eine Leiste (62) angeformt ist, die von der Außenkontur des Spoilers (12) abgewinkelt ist.

6. Wischblatt (10) mit einem Spoiler (12) und einer Schutzschiene (56) nach Anspruch 4 oder 5, **dadurch gekennzeichnet, dass** es eine Endkappe (64) besitzt und der Flansch (54) der Schutzschiene (56) sowie das Halteprofil (58) mit der Leiste (62) im Bereich der Endkappe (64) an jeder Längsseite eine Aussparung (66) aufweisen.

7. Wischblatt (10) eines Scheibenwischers mit einer Wischleiste (14) mit mindestens einem flachen, balkenförmigen, elastischen Tragelement (26) und einem Spoiler (12), **dadurch gekennzeichnet, dass** das Wischblatt (10) eine Schutzschiene (32, 44, 56, 72, 88) aufweist, die mit einem Grundkörper (34), der einen im Wesentlichen v-förmigen Querschnitt besitzt, eine Wischlippe (36) des Wischblatts (10) umfasst und mit Befestigungselementen (38, 52, 58, 78, 90) am Wischblatt (10) lösbar befestigt ist, wobei sich die Schutzschiene (32, 44, 56, 72, 88) an dem Spoiler (12) abstützt, indem sich an den Grundkörper (34) der Schutzschiene (72) ein nach außen gerichteter Flansch (74) anschließt mit einem an seiner freien Längsseite vom Spoiler (12) abgewinkelten Teil (76), der in eine zum Spoiler (12) hin offene Längsnut (80) eines Klipps (78) eingreift, wobei ein Halteprofil (84) des Klipps (78) mit einem Schenkel (86) den unteren Teil des Spoilers (12) im Bereich des Tragelements (26) umfasst und den Flansch (74) gegen eine Rippe (30) des Spoilers (12) drückt.

8. Wischblatt (10) mit einem Spoiler (12) und einer Schutzschiene (32, 44, 56, 72, 88) nach einem der vorhergehenden Ansprüche, **dadurch gekennzeichnet, dass** ein der Außenkontur des Spoilers (12) angepasster Spoilerschutz (94) vorgesehen ist, wobei die Schutzschiene (32, 44, 56, 72, 88) anstatt am Spoiler (12) am Spoilerschutz (94) lösbar befestigt ist.

9. Wischblatt (10) mit einem Spoiler (12) und einer Schutzschiene (32, 44, 56, 72, 88) nach einem der vorhergehenden Ansprüche, **dadurch gekennzeichnet, dass** an dem Spoiler (12) bzw. an dem Spoilerschutz (94) ein Aushilfswischblatt (98) lösbar befestigt ist.

10. Wischblatt (10) mit einem Spoiler (12) und einer Schutzschiene (32, 44, 56, 72, 88) nach Anspruch 9, **dadurch gekennzeichnet, dass** das Aushilfswischblatt (98) kürzer ist als das Wischblatt (10).

11. Wischblatt (10) mit einem Spoiler (12) und einer Schutzschiene (32, 44, 56, 72, 88) nach Anspruch 9 oder 10, **dadurch gekennzeichnet, dass** das Aushilfswischblatt (98) einen Kunststoffträger (102) besitzt, der einen Wischergummi (100) trägt und über ein Befestigungselement (104) an dem Spoiler (12) bzw. an dem Spoilerschutz (94) lösbar befestigt ist.

12. Wischblatt (10) mit einem Spoiler (12) und einer Schutzschiene (32, 44, 56, 72, 88) nach Anspruch 11, **dadurch gekennzeichnet, dass** das Befestigungselement (104) jeweils auf beiden Längsseiten des Wischblatts (10) mit jeweils einem Klipp (106) zu beiden Seiten eines Anschlusselements (108) des Wischblatts (10) an dem Spoiler (12) bzw. an dem Spoilerschutz (94) angeklippst ist.

## Claims

1. Wiper blade (10) of a windscreen wiper, with a wiper strip (14) having at least one flat, bar-shaped, elastic supporting element (26) and a spoiler (12), **characterized in that** the wiper blade (10) has a protective rail (32, 44, 56, 72, 88) which, together with a basic body (34), which has a substantially V-shaped cross section, comprises a wiper lip (36) of the wiper blade (10) and is fastened releasably to the wiper blade (10) by fastening elements (38, 52, 58, 78, 90), wherein the protective rail (32, 44, 56, 72, 88) is supported on the spoiler (12) by the basic body (34) of the protective rail (32) having, on each of the longitudinal sides thereof, towards the spoiler (12) a flange (38) which is angled outwards through approximately 90° and engages in an inwardly open longitudinal groove (40) which is formed by two ribs (30, 42) of the spoiler (12), wherein the flange (38) is supported on the mutually facing sides of the ribs (30, 42).

2. Wiper blade (10) of a windscreen wiper, with a wiper strip (14) having at least one flat, bar-shaped, elastic supporting element (26) and a spoiler (12), **characterized in that** the wiper blade (10) has a protective rail (32, 44, 56, 72, 88) which, together with a basic body (34), which has a substantially V-shaped cross section, comprises a wiper lip (36) of the wiper blade (10) and is fastened releasably to the wiper blade (10) by fastening elements (38, 52, 58, 78, 90), wherein the protective rail (32, 44, 56, 72, 88) is supported on the spoiler (12) by the basic body (34) of the protective rail (44) being adjoined by an inwardly open longitudinal groove (50) in which an outwardly directed rib (48) of the spoiler (12) engages.

3. Wiper blade (10) with a spoiler (12) and a protective rail (44) according to Claim 2, **characterized in that** the longitudinal groove (50) is formed by a flange (54) which is angled outwards from the basic body (34) of the protective rail (44) and by an inwardly directed groove wall (52) which is integrally formed on said flange, while the outwardly directed rib (48) of the spoiler (12) together with an inwardly directed rib (30) forms an outwardly open longitudinal groove (46) in which the grooved wall (52) of the protective rail (44) engages.

4. Wiper blade (10) of a windscreen wiper, with a wiper strip (14) having at least one flat, bar-shaped, elastic supporting element (26) and a spoiler (12), **characterized in that** the wiper blade (10) has a protective rail (32, 44, 56, 72, 88) which, together with a basic body (34), which has a substantially V-shaped cross section, comprises a wiper lip (36) of the wiper blade (10) and is fastened releasably to the wiper blade (10) by fastening elements (38, 52, 58, 78, 90), wherein the protective rail (32, 44, 56, 72, 88) is supported on the spoiler (12) by the basic body (34) of the protective rail (56) having an outwardly angled flange (54) which is adjoined by a holding profile (58) which encloses the lower part of the spoiler (12) in the region of the supporting element (26) such that the protective rail (56) is held on the spoiler (12) by the flange (54) and an upper limb (60) of the holding profile (58).

5. Wiper blade (10) with a spoiler (12) and a protective rail (56) according Claim 4, **characterized in that** a strip (62) which is angled from the outer contour of the spoiler (12) is integrally formed on the limb (60) of the holding profile (58) of the protective rail (56).

6. Wiper blade (10) with a spoiler (12) and a protective rail (56) according to Claim 4 or 5, **characterized in that** the wiper blade has an end cap (64), and the flange (54) of the protective rail (56) and the holding profile (58) with the strip (62) have a cutout (66) on each longitudinal side in the region of the end cap (64).

7. Wiper blade (10) of a windscreen wiper, with a wiper strip (14) having at least one flat, bar-shaped, elastic supporting element (26) and a spoiler (12), **characterized in that** the wiper blade (10) has a protective rail (32, 44, 56, 72, 88) which, together with a basic body (34), which has a substantially V-shaped cross section, comprises a wiper lip (36) of the wiper blade (10) and is fastened releasably to the wiper blade (10) by fastening elements (38, 52, 58, 78, 90), wherein the protective rail (32, 44, 56, 72, 88) is supported on the spoiler (12) by the basic body (34) of the protective rail (72) being adjoined by an outwardly directed flange (74) with a part (76) which is angled from the spoiler (12) on the free longitudinal side of said flange and engages in a longitudinal groove (80), which is open towards the spoiler (12), in a clip (78), wherein a holding profile (84) of the clip (78) together with a limb (86) encloses the lower part of the spoiler (12) in the region of the supporting element (26) and presses the flange (74) against a rib (30) of the spoiler (12).

8. Wiper blade (10) with a spoiler (12) and a protective rail (32, 44, 56, 72, 88) according to one of the preceding claims, **characterized in that** a spoiler guard (94) matched to the outer contour of the spoiler (12) is provided, wherein the protective rail (32, 44, 56, 72, 88) is fastened releasably to the spoiler guard (94) instead of to the spoiler (12).

9. Wiper blade (10) with a spoiler (12) and a protective rail (32, 44, 56, 72, 88) according to one of the preceding claims, **characterized in that** a supplemental wiper blade (98) is fastened releasably to the spoiler (12) or to the spoiler guard (94).

10. Wiper blade (10) with a spoiler (12) and a protective rail (32, 44, 56, 72, 88) according to Claim 9, **characterized in that** the supplemental wiper blade (98) is shorter than the wiper blade (10).

11. Wiper blade (10) with a spoiler (12) and a protective rail (32, 44, 56, 72, 88) according to Claim 9 or 10, **characterized in that** the supplemental wiper blade (98) has a plastics carrier (102) which bears a wiper blade rubber (100) and is fastened releasably to the spoiler (12) or to the spoiler guard (94) by a fastening element (104).

12. Wiper blade (10) with a spoiler (12) and a protective rail (32, 44, 56, 72, 88) according to Claim 11, **characterized in that** the fastening element (104) is clipped in each case on both longitudinal sides of the wiper blade (10) to the spoiler (12) or to the spoiler guard (94) by a respective clip (106) on both sides of a connection element (108) of the wiper blade (10).

## Revendications

1. Balai d'essuie-glace (10) d'un essuie-glace comprenant une raclette de balai d'essuie-glace (14) avec au moins un élément porteur élastique (26) plat, en forme de poutre, et un déflecteur (12), **caractérisé en ce que** le balai d'essuie-glace (10) présente un rail de protection (32, 44, 56, 72, 88), qui comprend, avec un corps de base (34) qui possède une section transversale essentiellement en forme de V, une lèvre de balai d'essuie-glace (36) du balai d'essuie-glace (10) et qui est fixé de manière détachable avec des éléments de fixation (38, 52, 58, 78, 90) au balai d'essuie-glace (10), le rail de protection (32, 44, 56, 72, 88) s'appuyant sur le déflecteur (12), le corps de base (34) du rail de protection (32) présentant à chaque fois sur ses côtés longitudinaux une bride (38) coudée vers l'extérieur sur environ 90°, qui vient en prise dans une rainure longitudinale (40) ouverte vers l'intérieur, qui est formée de deux nervures (30, 42) du déflecteur (12), la bride (38) s'appuyant contre des côtés des nervures (30, 42) tournés l'un vers l'autre.

2. Balai d'essuie-glace (10) d'un essuie-glace comprenant une raclette de balai d'essuie-glace (14) avec au moins un élément porteur élastique (26) plat, en forme de poutre, et un déflecteur (12), **caractérisé en ce que** le balai d'essuie-glace (10) présente un rail de protection (32, 44, 56, 72, 88), qui comprend, avec un corps de base (34) qui possède une section transversale essentiellement en forme de V, une lèvre de balai d'essuie-glace (36) du balai d'essuie-glace (10) et qui est fixé de manière détachable avec des éléments de fixation (38, 52, 58, 78, 90) au balai d'essuie-glace (10), le rail de protection (32, 44, 56, 72, 88) s'appuyant sur le déflecteur (12), une rainure longitudinale (50) ouverte vers l'intérieur se raccordant au corps de base (34) du rail de protection (44), dans laquelle rainure longitudinale vient en prise une nervure (48) du déflecteur (12) orientée vers l'extérieur.

3. Balai d'essuie-glace (10) comprenant un déflecteur (12) et un rail de protection (44) selon la revendication 2, **caractérisé en ce que** la rainure longitudinale (50) est formée par une bride (54) coudée vers l'extérieur depuis le corps de base (34) du rail de protection (44) et par une paroi de rainure (52) façonnée sur celle-ci, orientée vers l'intérieur, tandis que la nervure (48) orientée vers l'extérieur du déflecteur (12) forme avec une nervure (30) orientée vers l'intérieur une rainure longitudinale (46) ouverte vers l'extérieur, dans laquelle la paroi de rainure (52) du rail de protection (44) vient en prise.

4. Balai d'essuie-glace (10) d'un essuie-glace comprenant une raclette de balai d'essuie-glace (14) avec au moins un élément porteur élastique (26) plat, en forme de poutre, et un déflecteur (12), **caractérisé en ce que** le balai d'essuie-glace (10) présente un rail de protection (32, 44, 56, 72, 88), qui comprend, avec un corps de base (34) qui possède une section transversale essentiellement en forme de V, une lèvre de balai d'essuie-glace (36) du balai d'essuie-glace (10) et qui est fixé de manière détachable avec des éléments de fixation (38, 52, 58, 78, 90) au balai d'essuie-glace (10), le rail de protection (32, 44, 56, 72, 88) s'appuyant sur le déflecteur (12), le rail de protection (56) présentant sur son corps de base (34) une bride (54) coudée vers l'extérieur, à laquelle se raccorde un profilé de retenue (58), qui comprend la partie inférieure du déflecteur (12) dans la région de l'élément porteur (26), de telle sorte que le rail de protection (56) soit retenu par la bride (54) et par une branche supérieure (60) du profilé de retenue (58) contre le déflecteur (12).

5. Balai d'essuie-glace (10) comprenant un déflecteur (12) et un rail de protection (56) selon la revendication 4, **caractérisé en ce qu'**une raclette (62) est façonnée sur la branche (60) du profilé de retenue (58) du rail de protection (56), laquelle est coudée depuis le contour extérieur du déflecteur (12).

6. Balai d'essuie-glace (10) comprenant un déflecteur (12) et un rail de protection (56) selon la revendication 4 ou 5, **caractérisé en ce qu'**il possède un capuchon d'extrémité (64) et la bride (54) du rail de protection (56) ainsi que le profilé de retenue (58) avec la raclette (62) dans la région du capuchon d'extrémité (64) présentent de chaque côté longitudinal un évidement (66).

7. Balai d'essuie-glace (10) d'un essuie-glace comprenant une raclette de balai d'essuie-glace (14) avec au moins un élément porteur élastique (26) plat, en forme de poutre, et un déflecteur (12), **caractérisé en ce que** le balai d'essuie-glace (10) présente un rail de protection (32, 44, 56, 72, 88), qui comprend, avec un corps de base (34) qui possède une section transversale essentiellement en forme de V, une lèvre de balai d'essuie-glace (36) du balai d'essuie-glace (10) et qui est fixé de manière détachable avec des éléments de fixation (38, 52, 58, 78, 90) au balai d'essuie-glace (10), le rail de protection (32, 44, 56, 72, 88) s'appuyant sur le déflecteur (12), une bride (74) orientée vers l'extérieur se raccordant au corps de base (34) du rail de protection (72) avec une partie (76) coudée depuis le déflecteur (12) au niveau de son côté longitudinal libre, laquelle partie (76) vient en prise dans une rainure longitudinale (80) d'un circlip (78) ouverte vers le déflecteur (12), un profilé de retenue (84) du circlip (78) entourant avec une branche (86) la partie inférieure du déflecteur (12) dans la région de l'élément porteur (26) et pressant la bride (74) contre une nervure (30) du déflecteur (12).

8. Balai d'essuie-glace (10) comprenant un déflecteur (12) et un rail de protection (32, 44, 56, 72, 88) selon l'une quelconque des revendications précédentes, **caractérisé en ce qu'**une protection de déflecteur (94) adaptée au contour extérieur du déflecteur (12) est prévue, le rail de protection (32, 44, 56, 72, 88) étant fixé de manière détachable, non pas au déflecteur (12), mais à la protection de déflecteur (94).

9. Balai d'essuie-glace (10) comprenant un déflecteur (12) et un rail de protection (32, 44, 56, 72, 88) selon l'une quelconque des revendications précédentes, **caractérisé en ce qu'**un balai d'essuie-glace auxiliaire (98) est fixé de manière détachable au déflecteur (12) ou à la protection de déflecteur (94).

10. Balai d'essuie-glace (10) comprenant un déflecteur (12) et un rail de protection (32, 44, 56, 72, 88) selon la revendication 9, **caractérisé en ce que** le balai d'essuie-glace auxiliaire (98) est plus court que le balai d'essuie-glace (10).

11. Balai d'essuie-glace (10) comprenant un déflecteur (12) et un rail de protection (32, 44, 56, 72, 88) selon la revendication 9 ou 10, **caractérisé en ce que** le balai d'essuie-glace auxiliaire (98) possède un support en caoutchouc (102) qui porte un caoutchouc d'essuie-glace (100) et qui est fixé de manière détachable par le biais d'un élément de fixation (104) au déflecteur (12) ou à la protection de déflecteur (94).

12. Balai d'essuie-glace (10) comprenant un déflecteur (12) et un rail de protection (32, 44, 56, 72, 88) selon la revendication 11, **caractérisé en ce que** l'élément de fixation (104) est enclipsé à chaque fois sur les deux côtés longitudinaux du balai d'essuie-glace (10) à un circlip (106) respectif des deux côtés d'un élément de raccordement (108) du balai d'essuie-glace (10) au déflecteur (12) ou à la protection de déflecteur (94).
